# EUROPÄISCHE PATENTSCHRIFT

(11) **EP 1 031 027 B1**
(45) Veröffentlichungstag und Bekanntmachung des Hinweises auf die Patenterteilung: **10.04.2002**
(21) Anmeldenummer: 98963354.0
(22) Anmeldetag: 09.11.1998
(51) Int. Cl.: G01N 21/89, G01N 21/86

(54) **VERFAHREN UND VORRICHTUNG ZUM NACHWEIS VISKOSER FLÜSSIGKEITEN AUF FESTEM, INSBESONDERE BEWEGTEM UNTERGRUND**
METHOD AND DEVICE FOR DETECTING VISCOUS LIQUIDS ON A SOLID, ESPECIALLY MOVING, UNDERSURFACE
PROCEDE ET DISPOSITIF PERMETTANT LA DETECTION DE LIQUIDES SUR UN SUPPORT SOLIDE, NOTAMMENT MOBILE.

(30) Priorität: 10.11.1997 DE 19750862
(43) Veröffentlichungstag der Anmeldung: 30.08.2000
(73) Patentinhaber: Loerke, Reinhard, 03058 Haasow (DE)
(72) Erfinder: Loerke, Reinhard, 03058 Haasow (DE)
(74) Vertreter: Hannig, Wolf-Dieter, Dipl.-Ing.
(86) Internationale Anmeldenummer: DE9803372
(87) Internationale Veröffentlichungsnummer: WO9924819

(56) Entgegenhaltungen:
- EP-A- 0 300 734
- DE-U- 9 305 877
- US-A- 3 330 961
- US-A- 4 189 335
- US-A- 4 704 603

## Beschreibung

Die Erfindung betrifft ein Verfahren zum Nachweis viskoser Flüssigkeiten auf festem, insbesondere bewegtem Untergrund, beispielsweise flächigem Verpackungsmaterial wie Pappe, Papier, Karton, Kunststoff o. dgl., bei dem die viskose Flüssigkeit, insbesondere Leim, auf einen sich bewegenden Untergrund in Form eines Musters aufgetragen wird, anschließend Licht aus einer Lichtquelle auf die viskose Flüssigkeit gesendet und von dieser reflektiert wird, dieses reflektierte Licht ein periodisches Helligkeitsprofil erhält, das von einem Detektor empfangen und sodann in ein periodisches elektrisches Signal umgewandelt wird, mit dem das Vorhandensein der viskosen Flüssigkeit festgestellt wird.

Die Erfindung betrifft auch eine Vorrichtung zur Durchführung des Verfahrens mit einem Vorratsbehalter fur die viskose Flussigkeit, insbesondere Leim, und einer Auftragseinrichtung zum Aufbringen der viskosen Flüssigkeit auf die fortlaufende Bahn, einer gegen die aufgetragene viskose Flussigkeit gerichteten Lichtquelle zum Beleuchten der Flussigkeit und einem Detektor zum Erfassen des von der Flüssigkeit reflektierten Lichtes.

Bekannt sind Vorrichtungen, die viskose Flüssigkeiten, insbesondere Leim, auf schnell bewegtem Untergrund, beispielsweise Verpackungsmaterial fortlaufend auftragen.

Aus der DE-C 195 20 190 ist eine Vorrichtung zur Überwachung eines Klebstoffauftrages auf einen Gegenstand bekannt, der durch eine Transportvorrichtung transportiert wird und mittels einer Klebstoffaufbringvorrichtung mit Klebstoff versehen ist. Bei dieser bekannten Überwachungseinrichtung ermittelt ein Sensor die Ankunft des Gegenstandes, wobei der Sensor an einem vorgegebenen Ort der Transport- oder Fördereinrichtung angeordnet ist. Eine Entfernungsmeßeinrichtung mißt die Entfernung, über die die Fördereinrichtung den Gegenstand befördert. Mit einer Bilderzeugungseinrichtung, die nach dem Sensor angeordnet ist, werden Bilder des beleimten Gegenstandes hergestellt. Zu dieser bekannten Vorrichtung gehören ferner ein Zeitimpulsgenerator zur Erzeugung eines Zeitimpulses, eine Klebemusterfestlegungsvorrichtung zur Festlegung eines Musters und eine Vergleichseinrichtung zum Vergleich eines Musters, das durch die Klebemusterfestlegungsvorrichtung festgelegt ist, mit den Bildern, die von der Bilderzeugungseinrichtung erhalten werden.
In der Umgebung der Bilderzeugungseinrichtung befindet sich eine Beleuchtungseinrichtung, die den Gegenstand in einem Winkel zur Achse zur Beleuchtungseinrichtung beleuchtet. Die Überwachung wird mittels mindestens einem Bild des reflektierten Lichtes vorgenommen, das vom Gegenstand und dem auf den Gegenstand aufgebrachten Klebstoff reflektiert wird. Ein Wechsel von Licht und Schatten erzeugt unterschiedliche Graupegel auf dem Bild.

Die DE-A 38 40 998 beschreibt eine Verrichtung zum zerstörungsfreien Aufspüren von Inhomogenitäten in elastischen Werkstoffen mit einer Belastungseinrichtung zur Verformung des Werkstoffes und einer Beleuchtungseinrichtung. Die Belastungseinrichtung sendet gepulste Druckwellen auf eine mittels der Beleuchtungseinrichtung beleuchteten Stelle aus und ermittelt mittels einer optischen berührungslos arbeitenden Abstandsmeßeinrichtung die Verformung der Oberfläche. Die zu lösende Aufgabe dieses bekannten Standes der Technik besteht darin, Störungen in elastischen oder viskoelastischen Werkstoffen mit einem Minimum an Aufwand zu ermitteln.

Nach dem in der DE-C 36 38 932 offenbarten Verfahren zur kontinuierlichen Bestimmung der Beschichtungsmenge von Silikonen auf einer fortlaufenden Bahn aus Papier, Karton oder Kunststoff innerhalb einer Beschichtungsanlage wird der Glanz in zwei getrennten Meßeinheiten mit separaten Ein- und Ausgangssignalen vor und nach der Beschichtung kontinuierlich gemessen, wobei anhand von materialspezifischen Meßkurven die Auftragsmenge an Silikonen bestimmt wird.

Keine dieser bekannten Lösungen des Standes der Technik ermöglicht den kontinuierlichen Nachweis des Vorhandenseins von viskosen Flussigkeiten auf festen bewegten Untergrund, insbesondere Verpackungsbahnen.

Die bekannte Lösung nach der DE-C 195 20 190 ist durch die Erzeugung von Vergleichsbildern apparativ sehr aufwendig, kompliziert im Aufbau und trotzdem nicht zuverlässig genug, weil bei vollkommen einheitlichen Untergrund und Klebstoff eine Unterscheidung schwer möglich ist.
Die anderen bekannten Lösungen (DE-C 36 38 932, DE-A 38 40 998) haben gänzlich andere Zielstellungen und Aufgaben, als das sie der Fachmann in Betracht zu ziehen hätte.

Bekannt ist aus der EP-A-0 300 734 auch ein Verfahren und eine Vorrichtung zum Bestimmen der Anwesenheit eines Beschichtungsmaterials auf einer bewegten Bahn, beispielsweise Klebestrips auf Filterpapier für Zigaretten. Es wird diffuses Licht aus einer fluoreszierenden Lampe in definierter Weise auf eine sehr glatte bzw. spiegelnde Beschichtung gelenkt. Einerseits werden die Reflexionen von der spiegelnden Oberfläche, andererseits das von der nicht beschichteten Unterlage diffus gestreute Licht mit einem CCD-Scanner in ein elektrisches Signal umgewandelt und ausgewertet. Die Unterscheidung von direkt gerichtetem und diffusem Licht erfolgt durch die Anordnung von Detektoren in einer Richtung gegenüber der Lampe, die der normalen Reflexion von einer ebenen Fläche entspricht, und durch die Anordnung von Referenzdetektoren, bei denen nur diffuse Reflexionen zu erwarten sind. Die elektrischen Signale werden in ein Bild von Grauwerten umgewandelt, so daß man fur die gut reflektierenden Strips helle Flachen und für die Flächen des Filterpapiers dunkle Flächen erhält.
Folglich arbeitet diese bekannte Lösung nur dann zufriedenstellend, wenn die beschichteten Flächen eindeutig hellere Reflexionen liefern als die nicht beschichteten Flächen. Daher ist dieses bekannte Verfahren nicht für gut reflektierende bzw. in weiten Grenzen nicht einheitlich reflektierende (unebene) Unterlagen geeignet wie sie beispielsweise in der Verpackungsindustrie anfallen.
Die gesamte Auswertung ist darüber hinaus aufwendig und kompliziert.
Diese Nachteile treffen auch für die aus dem Stand der Technik ferner bekannter Lösungen gemäß US-A-4704603 und US-A-4189335 zu.

Bei diesem Stand der Technik liegt der Erfindung die Aufgabe zugrunde, ein Verfahren und eine Vorrichtung der eingangs genannten Art derart zu verbessern, daß viskose Flüssigkeiten auf festem Untergrund kontinuierlich mit geringstem Aufwand zuverlässig nachweisbar sind.

Diese Aufgabe wird durch ein Verfahren der eingangs genannten Gattung mit den kennzeichnenden Merkmalen des Anspruches 1 und durch eine Vorrichtung mit den kennzeichnenden Merkmalen des Anspruches 9 gelöst.

Vorteilhafte Ausgestaltungen sind den Unteransprüchen entnehmbar.

Das erfindungsgemäße Verfahren ermöglicht es, auf flächigen bewegten Verpackungsbahnen aus Papier, Pappe, Karton oder Kunststoff den Auftrag der viskosen Flüssigkeit kontinuierlich nachzuweisen und zu kontrollieren. Dadurch, daß keine speziellen Eigenschaften der viskosen Flussigkeit wie physikalische und chemische Parameter oder Musterbilder ermittelt und überwacht zu werden brauchen, ist das erfindungsgemaße Verfahren einfach und unkompliziert mit geringem Aufwand durchzuführen. Die erfindungsgemäße Vorrichtung laßt sich problemlos in vorhandene Beschichtungsanlagen integrieren. Sie ist zuverlässig, wartungsarm, bedienungsfreundlich und erfordert keinen aufwendigen Umbau vorhandener Anlagen.

Die Erfindung soll nachstehend in einem Ausführungsbeispiel anhand der Zeichnungen näher veranschaulicht werden.

Es zeigen:
- Fig. 1: ein Funktionsschema des erfindungsgemäßen Verfahrens,
- Fig. 2: eine Darstellung des Oberflächenprofils des Leimrades als Einzelheit A nach Fig. 1,
- Fig. 3: eine Darstellung der Leimspur als Einzelheit B nach Fig. 1,
- Fig. 4: eine vergroßerte Ansicht der profilierten Leimspur mit Darstellung der Reflexion des Lichtes einer Lichtquelle und Erfassung des Lichtes durch einen Photodetektor,
- Fig. 5: ein Schema der erfindungsgemäßen Vorrichtung Mit Lichtquelle und Druckluftbeaufschlagung,
- Fig. 6: den Aufbau der Drucklufterzeugung mit Einzelheit C gemäß Fig. 5.
- Fig. 7: eine Darstellung der Leimspur als Einzelheit nach Fig. 5 und

Im folgenden Ausführungsbeispiel soll verstanden sein:
- unter viskoser Flüssigkeit eine Substanz, die so verformbar ist, daß sie eine glatte, Licht reflektierende Oberfläche bildet, beispielsweise Leim zum Verkleben von Kartons, und die während des nachfolgend beschriebenen Verfahrens verformbar bleibt;
- unter festem Untergrund eine Verpackungsbahn, auf dem die viskose Flüssigkeit in fortlaufender Weise, beispielsweise in schmalen Streifen haftet.

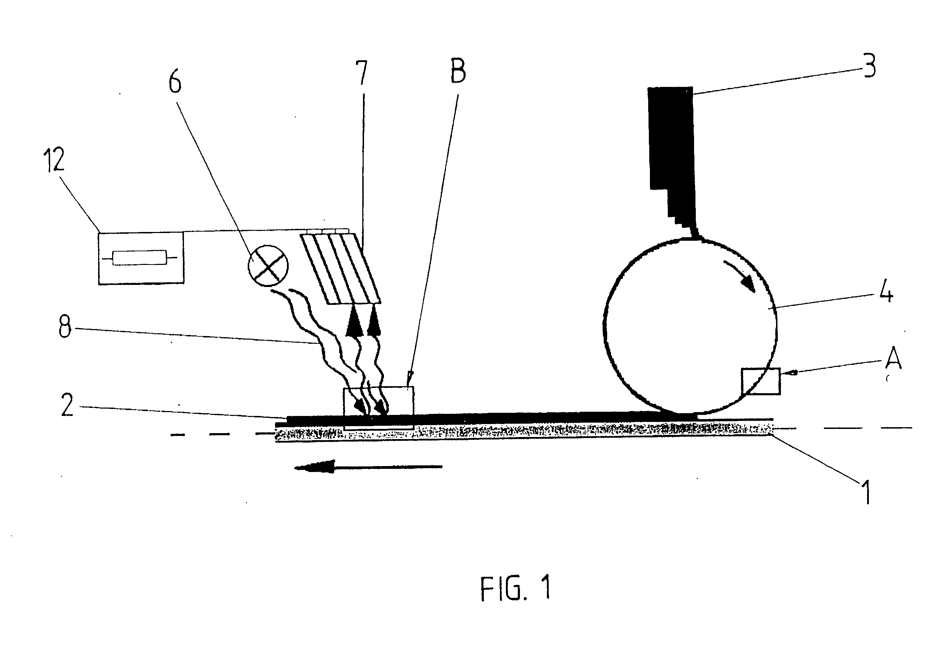

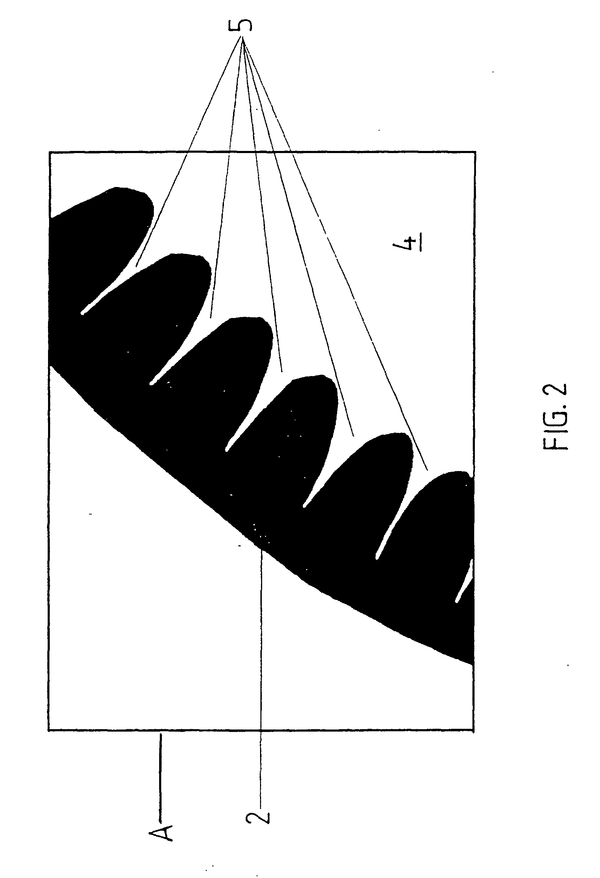

Gemäß Fig. 1 ist eine Bahn **1** aus Pappe mit einem Leim **2** kontinuierlich in schmalen Streifen zu benetzen. Der Leim **2** befindet sich im Vorratsbehälter **3** und wird auf ein Leimrad **4** gegeben. Das Leimrad **4** hat nach der Einzelheit "A" (Fig. 2) eine mit Kerben **5** versehene Oberfläche.

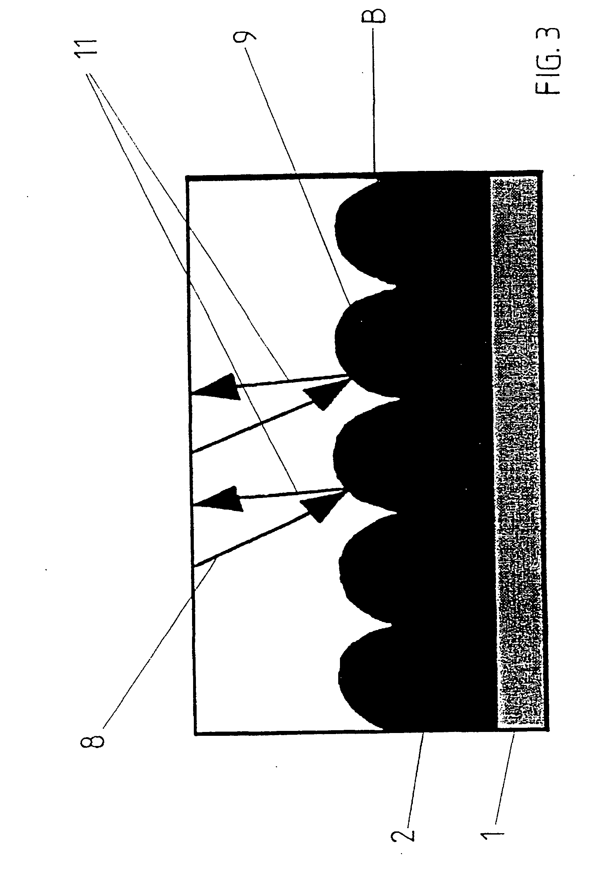

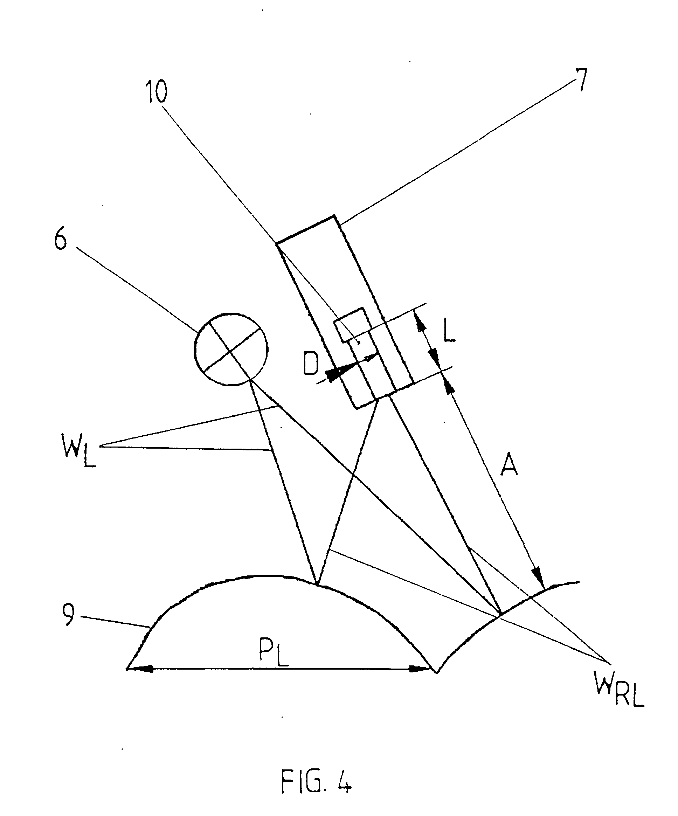

Beim Auftrag des Leimes **2** auf die sich fortbewegende Bahn **1** entsteht eine Leimspur mit einem sich periodisch wiederholenden Profil, das dem Oberflächenprofil des Leimrades **4** umgekehrt adäquat ausgebildet ist (siehe Einzelheit "B" - Fig. 3).
Eine Lichtquelle **6** und ein dieser Lichtquelle zugeordneter Photodetektor **7** befinden sich nahe der mit der Leimspur versehenen Bahn **1.** Die Lichtquelle **6** sendet, wie Fig. **4** zeigt, sichtbares Licht **8** auf das durch das Leimrad **4** periodisch verformte Profil **9** in der Oberfläche der Leimspur. Das Licht **8** fällt nach Zurücklegen eines Weges **W**_{**L**} auf das wellenformige Profil **8,** wobei ein Teil des einfallenden Lichts **8** rückwärts reflektiert wird. Durch die Fortbewegung der Bahn **1** wird das Licht 8 entsprechend der Lage und Form des Profils **9** in regelmäßigen Abständen in Richtung des Photodetektors **7** reflektiert und erhält somit ein schwankendes Helligkeitsprofil. Im rückwärtigen Reflexionsbereich dieses Lichtes ist der Photodetektor **7** positioniert, der einen Einlaßkanal **10** besitzt.
Dieser Einlaßkanal **10** ist so ausgerichtet, daß er nur das rückwärts reflektierte Licht **11** nach Zurücklegen eines Weges **W**_{**RL**} in den Detektor **7** einläßt. Der Photodetektor **7** ist mit einer elektronischen Schaltung **12** verbunden, die fähig ist, das festgestellte Helligkeitsprofil kontinuierlich auszuwerten.
Der Durchmesser **D** des Einlaßkanals **10** ist gegenüber seiner Länge **L** so klein gewählt, daß nur das rückwärts reflektierte Licht **11** hineingelangen kann. Das ist immer dann der Fall, wenn das Verhältnis **V**_{**D-L**} aus der Länge **L** zum Durchmesser **D** des Einlaßkanals **10** größer ist als das Verhältnis **V**_{**A-PL**} aus dem Abstand **A** zwischen Einlaßkanal **10** und Profil **9** zur Länge **P**_{**L**} des Profils **9,** so daß vom vorhergehenden oder nachfolgenden Profil kein reflektiertes Licht in den Einlaßkanal **10** gelangen kann.

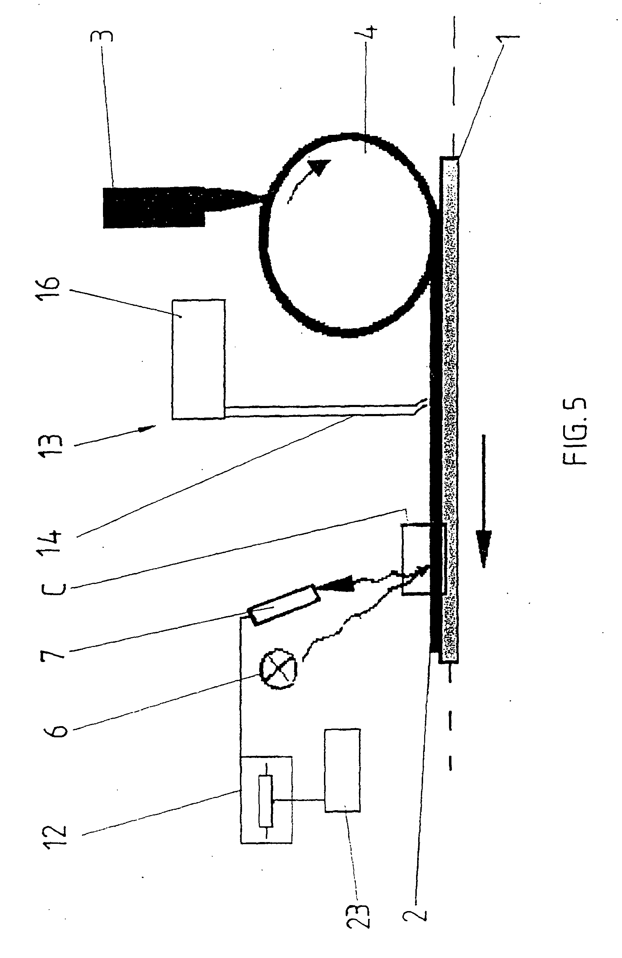

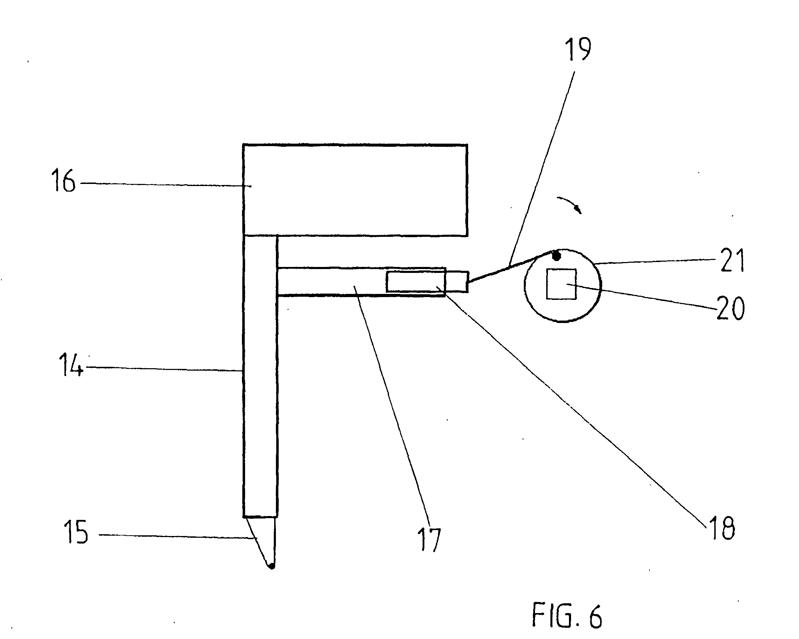

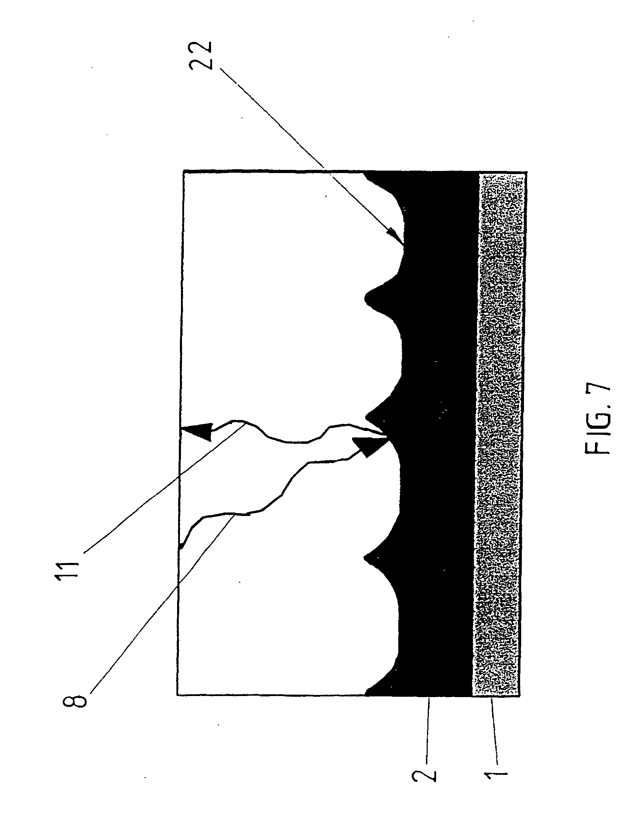

Die Fig. 5 zeigt eine Variante der erfindungsgemäßen Vorrichtung, nach der neben dem Leimrad **4** ein Drucklufterzeugungssystem **13** zur Verformung der aufgetragenen Leimspur Anwendung findet. In der vorliegenden Variante ist das Leimrad **4** ohne Kerben ausgeführt. Nach dem Auftrag des Leimes in Form einer Leimspur auf die Bahn **1** ist ein Zuführrohr **14** mit Düse **15** bis nahe an die Leimspur herangeführt. Das Zuführrohr **14** mündet anderenends in einen Druckluftbehälter **16** ein, aus dem Druckluft mit periodisch schwankendem Druck über das Zuführrohr **14** und die Düse **15** auf die Leimspur gedrückt wird. Fig. 7 zeigt den näheren Aufbau dieses Drucklufterzeugungssystems **13,** das nach dem Luftpumpenprinzip arbeitet. In das Zuführrohr **14** mündet ein nach außen luftdicht verschlossener Zylinder **17** ein, in dem ein Kolben **18** geführt ist. Der Kolben **18** ist durch eine Pleuelstange **19** mit einem durch einen Motor **20** angetriebenen Antriebsrad **21** verbunden. Während der Bewegung des Kolbens **18** weg von dem Zuführrohr **14** saugt dieser Luft aus dem Zuführrohr **14**, wodurch der Überdruck aus dem Druckluftbehälter **16** im Zuführrohr **14** kompensiert wird und wenig Luft aus der Düse **15** austritt. Bewegt sich der Kolben **18** in Richtung des Zuführrohres **14**, drückt er zusätzlich Luft in das Zuführrohr, wodurch stoßweise Luft aus der Düse **15** austritt und in der Leimspur in regelmäßigen Abständen Vertiefungen **22** hinterläßt. Die Einzelheit "C" in der Fig. 6 zeigt die Form einer solchen

Vertiefung **22** und den von der Lichtquelle **6** ausgesendeten Lichtstrahl **8** der auf den Rand der Vertiefung **22** trifft und an diesem in Richtung des Photodetektors **7** reflektiert wird.
Die elektronische Schaltung **12** erzeugt in Abhängigkeit der Kreisfrequenz des Motors **20** mit Hilfe eines Signalgebers **23** Spannungsimpulse, deren zeitlicher Abstand genau dem zeitlichen Abstand zwischen zwei Reflexionen an den Rändern benachbarter Vertiefungen **22** entsprechen muß. Die Spannungsimpulse werden beispielsweise durch ein auf der Antriebswelle befestigten Nocken gewonnen. Solange Koinzidenz zwischen den Spannungsimpulsen aus dem Photodetektor **7** und den Spannungsimpulsen des Signalgebers **23** besteht, ist der Leim auf der Bahn **1** vorhanden.

## Patentansprüche

1. Verfahren zum Nachweis viskoser Flüssigkeiten auf festem, insbesondere bewegtem Untergrund, beispielsweise flächigem Verpackungsmaterial wie Pappe, Papier, Karton, Kunststoff o. dgl., bei dem die viskose Flüssigkeit, insbesondere Leim, auf einen sich bewegenden Untergrund in Form eines Musters aufgetragen wird, anschließend Licht aus einer Lichtquelle auf die viskose Flüssigkeit gesendet und von dieser reflektiert wird, dieses reflektierte Licht ein periodisches Helligkeitsprofil erhält, das von einem Detektor empfangen und in ein periodisches elektrisches Signal umgewandelt wird, mit dem das Vorhandensein der Flüssigkeit festgestellt wird,
**dadurch gekennzeichnet, daß** der Oberfläche des auf den bewegten Untergrund aufgetragenen Musters aus viskoser Flüssigkeit ein definiertes und periodisch sich wiederholendes Profil aufgeprägt und von diesem Profil das Licht rückwärts in den Detektor reflektiert wird, wobei für die rückwärtige Reflexion des Lichtes ein Verhältnis **(V**_{**D-L**}**)** aus der Länge **(L)** des Einlaßkanals des Detektors zum Durchmesser **(D)** des Einlaßkanals gilt, das größer ist, als das Verhältnis **(V**_{**A-PL**}**)** aus dem Abstand **(A)** des Einlaßkanals vom Oberflächenprofil zur Länge **(P**_{**L**}**)** des jeweiligen Oberflächenprofils.

2. Verfahren nach Anspruch 1, **dadurch gekennzeichnet, daß** dem Oberflächenprofil eine konkave oder konvexe Form aufgeprägt wird.

3. Verfahren nach Anspruch 1 und 2, **dadurch gekennzeichnet, daß** zum Prägen des Oberflächenprofils der viskosen Flüssigkeit ein Leimrad oder ein periodisch sich verändernder Druck verwendet wird.

4. Verfahren nach Anspruch 3, **dadurch gekennzeichnet, daß** der Druck mit Druckluft aufgebracht wird.

5. Verfahren nach Anspruch 1, **dadurch gekennzeichnet, daß** Licht mit einer Wellenlänge von 300 nm bis 1200 nm, vorzugsweise sichtbares Licht oder Laserlicht, verwendet wird.

6. Verfahren nach Anspruch 1, **dadurch gekennzeichnet, daß** das reflektierte Licht von einem Photodetektor erfaßt wird.

7. Verfahren nach einem oder mehreren der vorherigen Ansprüche, **dadurch gekennzeichnet, daß** das Detektorsignal mit einem vom bewegten Untergrund gesteuerten Impulsgeber geregelt wird und/oder ausgewählte Detektoren gleichzeitig einen Lichtimpuls erhalten, um Schwankungen in der Bewegungsgeschwindigkeit des Untergrundes und Formschwankungen der Flüssigkeit zu kompensieren.

8. Verfahren nach einem oder mehreren der vorherigen Ansprüche, **dadurch gekennzeichnet, daß** zur Umwandlung des Helligkeitsprofils in ein periodisches elektrisches Signal ein für das Licht empfindlicher Detektor verwendet wird, und daß mit den gewonnenen Signalen die Prozeßführung geregelt wird.

9. Vorrichtung zur Durchführung des Verfahrens nach Anspruch 1, mit einem Vorratsbehälter für die viskose Flüssigkeit, insbesondere Leim, und einer Auftragseinrichtung zum Aufbringen der viskosen Flüssigkeit auf die fortlaufende Bahn, einer gegen die aufgetragene viskose Flüssigkeit gerichteten Lichtquelle zum Beleuchten der Flüssigkeit und einem Detektor zum Erfassen des von der Flüssigkeit reflektierten Lichtes, **dadurch gekennzeichnet, daß** ein profiliertes Leimrad **(4)** und/oder ein Drucklufterzeugungssystem zur Erzeugung eines periodischen Oberflächenprofils **(9)** mit definierten Reflexionsbereichen in der aufgetragenen viskosen Flüssigkeit vorgesehen ist, und daß der im Reflexionsbereich angeordnete Detektor **(7)** mit einem Einlaßkanal **(10)** versehen ist, dessen Verhältnis **(V**_{**D-L**}**)** aus der Länge **(L)** des Einlaßkanals zum Durchmesser **(D)** des Einlaßkanals größer ist als das Verhältnis **(V**_{**A-PL**}**)** aus dem Abstand **(A)** des Einlaßkanals **(10)** vom Oberflächenprofil **(9)** zur Länge **(P**_{**L**}**)** des jeweiligen Oberflächenprofils, und daß der Detektor **(7)** mit einer elektronischen Schaltung **(12)** verbunden ist, die das Vorhandensein viskoser Flüssigkeit auf der Bahn anzeigt.

10. Vorrichtung nach Anspruch 9, **dadurch gekennzeichnet, daß** die elektronische Schaltung **(12)** mit einem Signalgeber **(23)** verbunden ist.

11. Vorrichtung nach Anspruch 9, **dadurch gekennzeichnet, daß** mehrere Detektoren **(7)** in Bewegungsrichtung des Untergrundes hintereinander angeordnet sind.

12. Vorrichtung nach Anspruch 9, **dadurch gekennzeichnet, daß** in die Oberfläche des Leimrades **(4)** Kerben **(5)** eingeformt sind.

13. Vorrichtung nach Anspruch 9, **dadurch gekennnzeichnet,** daß das Drucklufterzeugungssystem **(13)** aus einem Speicherbehälter **(16)** für Druckluft, einem an den Speicherbehälter angeschlossenen Zuführrohr **(14)** mit Düse **(15)**, die unmittelbar über der Bahn **(1)** gegen die aufgetragene Flüssigkeit gerichtet angeordnet ist, einem an das Zuführrohr **(14)** angeschlossenen Zylinder **(17)** mit Kolben **(18),** der über eine Pleuelstange **(19)** mit einem Motor **(20)** verbunden ist, der mit einem Signalgeber **(23)** in Verbindung steht, welcher mittels der elektronischen Schaltung **(12)** in Abhängigkeit der Kreisfrequenz des Motors Spannungsimpulse liefert, deren zeitliche Abstände voneinander dem Abstand zweier Reflexionen entspricht.

14. Vorrichtung nach Anspruch 9 bis 13, **dadurch gekennzeichnet, daß** der Detektor **(7)** ein Photodetektor ist.

## Claims

1. Method for detecting viscous liquids on a solid, especially moving, underground, for example flat packing material, paper board, synthetic material or suchlike, in which the viscous liquid, especially glue, is applied in form a pattern on a moving underground, than light from a light source is sent on the viscous liquid and reflected by this, the reflected light maintains a periodical brightness profile, which is received by a detector and changed into a periodical electrical signal with which the existence of the liquid is determined, **characterized in that** a defined and periodical repeated profile is impressed on the pattern surface of the viscous liquid applied on the moving underground and the light is reflected by this profile backward into the detector, whereat a ratio (V_{D-L}) from the length (L) of the inlet channel of the detector to the diameter of the inlet channel is valid for the back reflection which is bigger than the ratio (V_{A-PL}) from distance (A) between the inlet channel and surface profile to the length (P_{L}) of the respective surface profile.

2. Method according to claim 1, **characterized in that** a concave and convex form is impressed on the surface profile.

3. Method according to claim 1 and 2, **characterized in that** a glue cylinder or a periodic changeable pressure is used for impressing of surface profile of the viscous liquid.

4. Method according to claim 3, **characterized in that** the pressure is applied with compressed air.

5. Method according to claim 1, **characterized in that** light, preferably visible light or laser light, is used with a wavelength of 300 nm to 1200 nm.

6. Method according to claim 1, **characterized in that** the reflected light is detected by a photo conductive detector.

7. Method according to one or more of the foregoing claims, **characterized in that** the detector signal is regulated with an impulse machine controlled by the moving underground and/or a light impulse is received simultaneously by selected detectors to compensate fluctuations in the movement speed of the underground and forming fluctuations of the liquid.

8. Method according to one or more of the foregoing claims, **characterized in that** a light sensitive detector is used to transform the brightness profile into a periodical electrical signal and the processing is controlled by generated signals.

9. Device for carrying out of the method according to claim 1 with a storage container for viscous liquid, especially glue, and an applying apparatus for deposition of the viscous liquid on the moving web, a light source having direction against the applied viscous liquid for lightening of the liquid, and a detector for detecting reflected light from the liquid, **characterized in that** a grooved glue cylinder (4) and/or a air compressor system is provided for generating a periodically surface profile (9) with defined reflection areas in the applied viscous liquid, and the detector (7) arranged in the reflection area is equipped with an inlet channel (10), of which the ratio (V_{D-L}) from the length (L) of the inlet channel to the diameter (D) of the inlet channel is bigger than the ratio (V_{A-PL}) from the distance (A) between the inlet channel and the surface profile (9) to the length (P_{L}) of the respective surface profile, ant the detector (7) is connected to an electronically circuit (12) for indicating the presence of viscous liquid on the web.

10. Device according to claim 9, **characterized in that** the electronically circuit is connected to a signal simulator (23).

11. Device according claim 9, **characterized in that** several detectors (7) are disposed in series in movement direction of the underground.

12. Device according to claim 9, **characterized in that** notches (5) are formed in the surface of the glue cylinder (4).

13. Device according to claim 9, **characterized in that** the air compressor system (13) comprising a storage container (16) for compressed air, a feeding pipe (14) with nozzle (15) connected to the storage container is arranged directly over the web in direction against the applied liquid is, the feeding pipe (14) is connected to a cylinder (17) with piston (18) which is coupled by a connecting rod (19) to a motor (20) , connected to a signal simulator (23), which delivers voltage pulse as a function of angular frequency by means of the electronic circuit, whereat the temporal distances of the voltage pulse correspond to the distance of two reflections.

14. Device according to claim 9 to 13, **characterized in that** the detector (7) is a photo conductive detector.

## Revendications

1. Procédé pour l'identification de liquides visqueux sur un subjectile solide, notamment en mouvement, par exemple un matériel d'emballage tel que carton-pâte, papier, carton, matière synthétique ou autr. où le liquide visqueux, notamment de la colle, est appliqué sous forme d'un dessin sur un subjectile en mouvement, ensuite de la lumière d'une source de lumière est émise sur le liquide visqueux et est reflétée par ce dernier, cette lumière réfléchie étant dotée d'un profil de luminosité qui est capté par un détecteur et transformé en un signal électrique périodique, avec lequel est constatée la présence du liquide, **caractérisé en ce que** la surface du dessin de liquide visqueux lequel est appliqué au subjectile en mouvement, est marquée d'un profil défini et se répétant périodiquement, et que la lumière est réfléchie en inverse dans le détecteur, pour la réflexion arrière de la lumière étant valable un rapport **(V**_{**D-L**}**)** de la longueur **(L)** du canal d'entrée du détecteur au diamètre **(D)** du canal d'entrée, lequel est plus grand que le rapport **(V**_{**A-PL**}**)** entre la distance **(A)** du canal d'entrée au profil de surface et la longueur **(P**_{**L**}**)** du profil de surface donné.

2. Procédé suivant la revendication 1, **caractérisé en ce que** le profil de surface est marqué d'une forme concave ou convexe.

3. Procédé suivant les revendications 1 et 2, **caractérisé en ce que**, pour le marquage du profil de surface du liquide visqueux, il est employé une roue à colle ou une pression variant périodiquement.

4. Procédé suivant la revendication 3, **caractérisé en ce que** la pression est appliquée au moyen d'air comprimé.

5. Procédé suivant la revendication 1, **caractérisé en ce qu'**il est utilisé de la lumière d'une longueur d'onde de 300 nm à 1 200 nm, de préférence de la lumière visible ou de la lumière laser.

6. Procédé suivant la revendication 1, **caractérisé en ce que** la lumière réfléchie est captée par un photodétecteur.

7. Procédé suivant l'une ou plusieurs des revendications précédentes, **caractérisé en ce que** le signal de détecteur est réglé au moyen d'un impulseur commandé par le subjectile en mouvement et/ou que des détecteurs choisis reçoivent en même temps une impulsion lumineuse pour compenser des variations dans la vitesse de mouvement du subjectile et des variations de forme du liquide.

8. Procédé suivant l'une ou plusieurs des revendications précédentes, **caractérisé en ce que**, pour la transformation du profil de luminosité en un signal électrique périodique, il est employé un détecteur sensible à la lumière et que la gestion du processus est réglée au moyen des signaux obtenus.

9. Dispositif pour la réalisation du procédé suivant la revendication 1, avec un réservoir pour le liquide visqueux, notamment de la colle, et un mécanisme d'enduction pour l'application du liquide visqueux sur le lé continu, une source de lumière dirigée contre le liquide visqueux appliqué pour l'éclairage du liquide et un détecteur pour le captage de la lumière réfléchie par le liquide, **caractérisé en ce qu'**il est prévu une roue profilée à colle **(4)** et/ou un système de production d'air comprimé pour la génération d'un profil de surface périodique **(9)** avec des zones de réflexion définis dans le liquide visqueux appliqué et que le détecteur **(7)** disposé dans la zone de réflexion est pourvu d'un canal d'entrée **(10)** dont le rapport **(V**_{**D-L**}**)** de la longueur **(L)** du canal d'entrée du détecteur au diamètre **(D)** du canal d'entrée est plus grand que le rapport **(V**_{**A-PL**}**)** entre la distance **(A)** du canal d'entrée **(10)** au profil de surface **(9)** et la longueur **(P**_{**L**}**)** du profil de surface donné, et que le détecteur **(7)** est relié à un circuit électronique **(12)** qui affiche la présence de liquide visqueux sur le lé.

10. Dispositif suivant la revendication 9, **caractérisé en ce que** le circuit électronique **(12)** est relié à un poste transmetteur des signaux **(23).**

11. Dispositif suivant la revendication 9, **caractérisé en ce que** plusieurs détecteurs **(7)** sont disposés en série dans le sens du mouvement.

12. Dispositif suivant la revendication 9, **caractérisé en ce que** la surface de la roue à colle **(4)** est munie d'encoches **(5).**

13. Dispositif suivant la revendication 9, **caractérisé en ce que** le système de production d'air comprimé **(13)** comporte un réservoir **(16)** pour l'air comprimé, un tube d'amenée **(14)** avec tuyère **(15)** qui est disposé immédiatement au-dessus du lé **(1)** contre le liquide appliqué, un cylindre **(17),** raccordé au tube d'amenée **(14),** avec piston **(18)** qui est relié, par l'intermédiaire d'une bielle **(19)**, à un moteur **(20)** qui est relié à un poste transmetteur des signaux **(23)** qui, en fonction de la fréquence angulaire du moteur, fournit des impulsions de tension dont les intervalles temporels les uns des autres correspondent à l'intervalle de deux réflexions.

14. Dispositif suivant les revendications 9 à 13, **caractérisé en ce que** le détecteur **(7)** est un photodétecteur.
